# Europäisches Patentamt

## European Patent Office

## Office européen des brevets

(11) Veröffentlichungsnummer: **0 405 324 B1**

(12)

# EUROPÄISCHE PATENTSCHRIFT

(45) Veröffentlichungstag der Patentschrift: **07.09.94**

(51) Int. Cl.⁵: **C08J 9/20**, //(C08J9/20, C08L25:04)

(21) Anmeldenummer: **90111719.2**

(22) Anmeldetag: **21.06.90**

(54) **Verfahren zur Herstellung von perlförmigen expandierbaren Styrolpolymerisaten.**

(30) Priorität: **28.06.89 DE 3921147**

(43) Veröffentlichungstag der Anmeldung:
**02.01.91 Patentblatt 91/01**

(45) Bekanntmachung des Hinweises auf die Patenterteilung:
**07.09.94 Patentblatt 94/36**

(84) Benannte Vertragsstaaten:
**AT BE DE ES FR GB IT NL**

(56) Entgegenhaltungen:
**FR-A- 2 082 724**
**US-A- 3 558 534**
**US-A- 3 657 162**

**CHEMICAL ABSTRACTS, Band 88, Nr. 18, 1. Mai 1978, Seite 17, Zusammenfassung Nr.121928j, Columbus, Ohio, US; & PL-A-87 498**

(73) Patentinhaber: **BASF Aktiengesellschaft Carl-Bosch-Strasse 38 D-67063 Ludwigshafen (DE)**

(72) Erfinder: **Hintz, Hans, Dr.**
**Wolframstrasse 4**
**D-6700 Ludwigshafen (DE)**
Erfinder: **Guhr, Uwe, Dr.**
**Beim Hochgericht 9**
**D-6718 Gruenstadt (DE)**
Erfinder: **Hahn, Klaus, Dr.**
**Im Buegen 9**
**D-6719 Kirchheim (DE)**
Erfinder: **Keppler, Hans Georg, Dr.**
**Gaesselweg 2**
**D-6940 Weinheim (DE)**

Rank Xerox (UK) Business Services
(3.10/3.09/3.3.3)

**Beschreibung**

Die Erfindung betrifft ein verfahren zur Herstellung perlförmiger expandierbarer Styrolpolymerisate mit verbesserter Expandierbarkeit. Schaumstoffe auf Basis von Styrolpolymerisaten haben als Wärmedämm- und Verpackungsmaterial eine große technische Bedeutung erlangt. Sie werden großtechnisch dadurch hergestellt, daß man zunächst durch Suspensionspolymerisation von Styrol in Gegenwart eines Treibmittels expandierbare Styrolpolymerisate herstellt, diese durch Erhitzen zu Schaumstoffpartikeln aufschäumt und anschließend in Formen zu Formteilen verschweißt.

Als nachteilig wurde die lange Reaktionszeit bei der Suspensionspolymerisation angesehen. Nachteilig war ferner der unbefriedigende Durchsatz beim Aufschäumen der expandierbaren Styrolpolymerisate zu Schaumstoffperlen.

Der Erfindung lag die Aufgabe zugrunde, die Reaktionszeit bei der Polymerisation zu verringern und gleichzeitig Produkte herzustellen, die mit hohem Durchsatz aufgeschäumt werden können, ohne die Dimensionsstabilität der daraus hergestellten Schaumstoff-Formkörper negativ zu beeinflussen. Es wurde überraschenderweise gefunden, daß diese Aufgaben durch eine veränderte Reaktionsführung gelöst werden können.

Gegenstand der Erfindung ist ein Verfahren zur Herstellung von perlförmigen expandierbaren Styrolpolymerisaten durch Polymerisation von Styrol, gegebenenfalls unter Mitverwendung weiterer Comonomerer, in wäßriger Suspension in Gegenwart üblicher Suspensionsstabilisatoren und üblicher styrollöslicher Polymerisationskatalysatoren und unter Zusatz von 1 bis 10 Gewichtsprozent eines $C_3$- bis $C_6$-Kohlenwasserstoffs als Treibmittel und gegebenenfalls üblicher Zusatzstoffe in wirksamen Mengen, dadurch gekennzeichnet, daß man

a) durch rasches Erhitzen des Polymerisationsansatzes innerhalb von maximal 2 Stunden auf 80 bis 90°C die Polymerisation einleitet,

b) anschließend die Reaktionstemperatur um 8 bis 17°C pro Stunde bis auf 120 bis 130°C ansteigen läßt, und daß

c) bei Erreichen von 100°C der Umsatz 30 bis 60 % beträgt, und

d) bei Erreichen der Maximaltemperatur der Umsatz mindestens 80 % beträgt, und

e) daß man den Ansatz anschließend bei einer Temperatur zwischen 100 und 130°C so lange hält, bis der Restmonomerengehalt im Polymerisat auf weniger als 0,1 % abgesunken ist.

Styrolpolymerisate im Sinn der Erfindung sind Polystyrol und Mischpolymerisate des Styrols mit anderen $\alpha,\beta$-olefinisch ungesättigten Verbindungen, die mindestens 50 Gewichts-% Styrol einpolymerisiert enthalten. Als Comonomere kommen z.B. in Frage $\alpha$-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat.

Als Treibmittel enthalten die Formmassen 1 bis 10 Gew.-%, vorzugsweise 2 bis 8 Gew.-%, insbesondere 3 bis 7 eines $C_3$- bis $C_6$-Kohlenwasserstoffs, wie Propan, Butan, Isobutan, n-Pentan, i-Pentan, Neopentan und/oder Hexan. Vorzugsweise wird ein handelsübliches Pentan-Gemisch verwendet.

Die Styrolpolymerisate können auch übliche Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindungen, wie Trisdibrompropylphosphat, Hexabromcyclododecan, Chlorparaffin, sowie Synergisten für Flammschutzmittel, wie Dicumyl und hochzersetzliche organische Peroxide; ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure, sowie Mittel zur Verkürzung der Entformzeit beim Ausschäumen, wie z.B. Glycerinester oder Hydroxycarbonsäureester. Die Zusatzstoffe können je nach der beabsichtigten Wirkung in den Teilchen homogen verteilt oder als Oberflächenbeschichtung vorliegen.

Die Suspensionspolymerisation von Styrol ist an sich bekannt. Sie ist ausführlich beschrieben im Kunststoff-Handbuch, Band V, "Polystyrol", Carl Hanser-Verlag, Seiten 679 bis 688. Dabei wird im allgemeinen Styrol, ggf. zusammen mit den oben genannten Comonomeren, in Wasser suspendiert, wobei übliche organische oder anorganische Suspensionsstabilisatoren, vorzugsweise in Mengen zwischen 0,05 und 2 Gew.-%, bezogen auf die Suspension, zugesetzt werden.

Die erfindungsgemäßen Styrolpolymerisate werden hergestellt durch Polymerisation von Styrol, ggf. zusammen mit bis zu 50 Gew.-% der oben genannten Comonomeren, in wäßriger Suspension, wobei vor, während oder nach der Polymerisation die oben beschriebenen Treibmittel und gegebenenfalls übliche Zusatzstoffe in wirksamen Mengen zugesetzt werden.

Man kann die Polymerisation auch in Gegenwart eines üblichen Kettenüberträgers ausführen, der das Molekulargewicht regelt. Vorzugsweise wird tert. -Dodecylmercaptan verwendet. Der Regler wird im allgemeinen in einer Menge von 0,0001 bis 0,01 Gew.-%, bezogen auf Styrol, verwendet.

Erfindungswesentlich ist es, durch rasches Erhitzen des Polymerisationsansatzes auf 80 bis 90°C die Polymerisation einzuleiten. Der Ansatz wird im allgemeinen unter Rühren innerhalb von 20 bis 120, vorzugsweise 60 bis 120 Minuten von Raumtemperatur auf 80 bis 90°C erhitzt.

Erfindungswesentlich ist ferner, daß man anschließend die Reaktionstemperatur um 8 bis 17°C pro Stunde, vorzugsweise 9 bis 15°C pro Stunde bis auf 120 bis 130°C ansteigen läßt. Da die Reaktion exotherm verläuft, wird dieser Temperaturanstieg durch entsprechende Kühlung kontrolliert.

Weiterhin ist es erfindungswesentlich, daß bei Erreichen von 100°C der Umsatz 30 bis 60 %, vorzugsweise 30 bis 55 %, insbesondere 30 bis 40 % beträgt, d.h. daß 30 bis 60 % des Umsatzes während des Temperaturanstiegs auf 100°C erfolgen soll, was durch entsprechende Probenahme und Analyse leicht kontrolliert werden kann.

Es ist auch erfindungswesentlich, daß bei Erreichen der Maximaltemperatur (d.h. 120 bis 130°C) der Umsatz mindestens 80 %, vorzugsweise 80 bis 98 % beträgt, und daß man den Ansatz anschließend bei einer Temperatur von 100 bis 130°C solange hält, bis der Restmonomerengehalt im Polymerisat auf weniger als 0,1 %, vorzugsweise weniger als 0,09 %, insbesondere weniger als 0,08 % abgesunken ist.

Durch das neue Verfahren ist es möglich, die Reaktionszeit gegenüber dem herkömmlichen Verfahren um 1 bis 2 Stunden zu verkürzen.

Durch die erfindungsgemäße Temperaturführung werden das Molekulargewicht und die Molekulargewichtsverteilung des Polymeren und damit verbunden die rheologischen Eigenschaften, die für die Expandierbarkeit verantwortlich sind, günstig beeinflußt. Die damit erzielte Erniedrigung der Dehnviskosität führt zu einer besseren Expandierbarkeit. Bei gleicher Dehnviskosität führt die erzielte Absenkung der reversiblen Dehnung zu einer verbesserten Dimensionsstabilität. Beide Eigenschaften können nach der Vorschrift in "Prüfung hochpolymerer Werkstoffe", Carl Hanser Verlag, Wien 1977, Seite 422, wie folgt gemessen werden:

Die Polymerisat-Teilchen werden durch Erhitzen auf 155°C aufgeschmolzen und 5 min lang entgast, wobei das Treibmittel verdampft. Durch Extrusion wird ein Polymerstrang mit einer Länge von 20 mm und einem Durchmesser von 5 mm hergestellt. Die Probe wird in eine Zugapparatur eingespannt, die sich in 150°C heißem Silikonöl befindet. Dort wird sie mit einer Zugspannung von $2.10^4$ Pa auf eine Länge von 300 mm gedehnt. Die Dehnviskosität $\mu$ ergibt sich als Verhältnis von Zugkraft zu Dehngeschwindigkeit. Nach dem Aufheben der Zugspannung schrumpft die Probe wieder. Die reversible Dehnung $E_r$ ist der natürliche Logarithmus des Verhältnisses Ausgangslänge der Probe zur Länge der Probe nach dem Schrumpfen.

Die erfindungsgemäß hergestellten teilchenförmigen treibmittelhaltigen Styrolpolymerisate haben - gemessen nach der beschriebenen Methode - eine Dehnviskosität von weniger als $3,5 \cdot 10^6$ Pa.s, vorzugsweise von weniger als $3 \cdot 10^6$ Pa.s und eine reversible Dehnung von weniger als 0,95, vorzugsweise von weniger als 0,85.

Die erfindungsgemäß hergestellten treibmittelhaltigen StyrolpolymerisatTeilchen haben im allgemeinen einen Durchmesser zwischen 0,2 und 4 mm. Sie können nach üblichen Methoden, z.B. mit Wasserdampf, zu Schaumstoffteilchen mit einem Durchmesser zwischen 0,5 und 2 cm und einer Schüttdichte zwischen 0,005 und 0,1 $g/cm^3$ vorgeschäumt werden. Es zeigt sich, daß dabei der Durchsatz erheblich erhöht wird und daß unter konstanten Schäumbedingungen die Schüttdichte erniedrigt wird.

Die vorgeschäumten Teilchen können dann nach üblichen Verfahren zu Schaum-Formteilen mit einer Dichte von 0,005 bis 0,1 $g/cm^3$ ausgeschäumt werden.

Die in den Beispielen genannten Teile und Prozente beziehen sich auf das Gewicht.

In der Tabelle sind die erfindungsgemäß verbesserten Expandierbarkeiten als Durchsatz (kg/h) bei vergleichbaren Schüttdichten und die dazugehörigen erfindungsgemäß erniedrigten Dehnviskositäten $\mu$ (Pa.s) und reversiblen Dehnungen $E_r$ aufgeführt.

Beispiel 1

1a Polymerisation

In einem druckfesten Rührkessel aus korrosionsfreiem Stahl wurde eine Mischung aus 150 Teilen Wasser, 0,1 Teilen Natriumpyrophosphat, 100 Teilen Styrol, 0,15 Teilen Benzoylperoxid und 0,25 Teilen t.-Butylperbenzoat (als Polymerisationsinitiatoren) unter Rühren innerhalb von 2 Stunden auf 85°C erhitzt. Anschließend wurde die Temperatur kontinuierlich innerhalb 3,5 Stunden auf 120°C erhöht. Nach 2 Stunden ab 85°C wurden 2 Teile einer 10%igen wäßrigen Lösung von Polyvinylpyrrolidon zugegeben.

Nach 3 Stunden ab 85°C wurden 7 Teile Pentan in den Rührkessel dosiert. Bei Erreichen der Temperatur von 100°C betrug der Umsatz 50 %, bei Erreichen der Maximaltemperatur von 120°C betrug der Umsatz 98 %. Dann wurde weitere 5 stunden bei 120°C gerührt. Nach 5 Stunden bei 120°C wies das Polymerisat nur noch einen Styrolgehalt von 0,09 % auf. Der Ansatz wurde anschließend abgekühlt, das Polymerisat wurde abgetrennt, gewaschen und getrocknet.

Das erhaltene Granulat zeigte einen mittleren Teilchendurchmesser von 1,5 mm.

1b Beschichtung

100 Teile des expandierbaren Polystyrol-Granulats mit einer Perlfraktion zwischen 1,0 und 2,3 mm Durchmesser wurden durch Auftrommeln im Schaufelmischer jeweils 3 Minuten lang mit 0,4 Teilen Glycerinmonostearat beschichtet.

1c Verarbeitung

Die beschichteten EPS-Perlen wurden in einem kontinuierlichen Rührschäumer, Typ Rauscher, mit strömendem Wasserdampf auf ein Schüttgewicht von 15 g/l ± 0,1 g/l vorgeschäumt und der Durchsatz in kg/h bestimmt.

Beispiel 2

Polymerisation

In einem druckfesten Rührkessel aus korrosionsfreiem Stahl wurde eine Mischung aus 150 Teilen Wasser, 0,1 Teilen Natriumpyrophosphat, 100 Teilen Styrol, 0,15 Teilen Benzoylperoxid und 0,25 Teilen t.-Butylperbenzoat (als Polymerisationsinitiatoren), 0,7 Teilen Hexabromcyclododecan als Flammschutzmittel und 0,2 Teilen Dicumylperoxid als Synergist unter Rühren innerhalb von 100 Minuten auf 85°C erhitzt. Anschließend wurde die Temperatur kontinuierlich innerhalb 3 Stunden auf 120°C erhöht. Nach 1,5 Stunden ab 85°C wurden 2 Teile einer 10%igen wäßrigen Lösung von Polyvinylpyrrolidon zugegeben. Nach 2,5 Stunden ab 85°C wurden 7 Teile Pentan in den Rührkessel dosiert. Bei Erreichen der Temperatur von 100°C betrug der Umsatz 30 %, bei Erreichen der Maximaltemperatur von 120°C betrug der Umsatz 80 %. Dann wurde weitere 6 Stunden gerührt, während die Temperatur langsam von 120 auf 110°C abgesenkt wurde. Nach Reaktionsende wies das Polymerisat nur noch einen Styrolgehalt von 0,09 % auf. Der Ansatz wurde anschließend abgekühlt, das Polymerisat wurde abgetrennt, gewaschen und getrocknet.

Das erhaltene Granulat zeigte einen mittleren Teilchendurchmesser von 1,5 mm.

Beschichtung und Verarbeitung entsprechen den Punkten 1b) und 1c).

Beispiel 3

Polymerisation

In einem druckfesten Rührkessel aus korrosionsfreiem Stahl wurde eine Mischung aus 150 Teilen Wasser, 0,1 Teilen Natriumpyrophosphat, 100 Teilen Styrol, 0,15 Teilen Benzoylperoxid und 0,25 Teilen t.-Butylperbenzoat (als Polymerisationsinitiatoren) sowie 0,005 Teile des Kettenüberträgers tert.-Dodecylmercaptan unter Rühren innerhalb von 90 Minuten auf 85°C erhitzt. Anschließend wurde die Temperatur kontinuierlich innerhalb 3,5 Stunden auf 125°C erhöht. Nach 2 Stunden ab 85°C wurden 2 Teile einer 10%igen wäßrigen Lösung von Polyvinylpyrrolidon zugegeben. Nach 3 Stunden ab 85°C wurden 7 Teile Pentan in den Rührkessel dosiert. Bei Erreichen der Temperatur von 100°C betrug der Umsatz 35 %, bei Erreichen der Maximaltemperatur von 125°C betrug der Umsatz 85 %. Dann wurde weitere 5 Stunden bei 120°C gerührt. Nach 5 Stunden bei 125°C wies das Polymerisat nur noch einen Styrolgehalt von 0,09 % auf. Der Ansatz wurde anschließend abgekühlt, das Polymerisat wurde abgetrennt, gewaschen und getrocknet.

Das erhaltene Granulat zeigte einen mittleren Teilchendurchmesser von 1,5 mm.

Beschichtung und Verarbeitung entsprechen den Punkten 1b) und 1c).

Beispiel 4

Es wurde wie in Beispiel 2 gearbeitet, jedoch unter Zusatz von 0,005 Teile des Kettenüberträgers tert.-Dodecylmercaptan als Substanz, die die Expandierbarkeit weiter verbessert. Bei Erreichen von 100°C betrug der Umsatz 32 %, bei Erreichen von 120°C betrug der Umsatz 82 %. Der Styrolgehalt des Polymerisats betrug 0,1 %.

Beschichtung und Verarbeitung entsprechen den Punkten 1b) und 1c).

Beispiel 5 (Vergleiche)

Die Mischungen nach den Beispielen 1 (Beispiel 5.1) und 2 (Beispiel 5.2) wurde in einem druckfesten Rührkessel aus korrosionsfreiem Stahl unter Rühren innerhalb von 3 Stunden auf 85°C erhitzt. Anschließend wurde die Temperatur kontinuierlich auf 120°C innerhalb 5 h erhöht. Im übrigen wurde wie im Beispiel 1 verfahren.

Beschichtung und Verarbeitung entsprechen den Punkten 1b) und 1c).

Tabelle

| | Expandierbarkeit als Durchsatz (bei Schüttdichte 15 g/l) kg/h | Expandierbarkeit als erreichbare minimale Schüttdichte nach 6 Minuten Vorschäumen im strömenden Dampf (1 bar abs.) im "Rauscherkasten" g/cm³ | Dehn-viskosität $\mu$ Pa·s | reversible Dehnung $E_r$ |
|---|---|---|---|---|
| Beispiel 1 | 140 | 0,0105 | $2{,}3 \cdot 10^6$ | 0,8 |
| Beispiel 2 | 137 | 0,011 | $2{,}4 \cdot 10^6$ | 0,82 |
| Beispiel 3 | 145 | 0,010 | $2{,}9 \cdot 10^6$ | 0,85 |
| Beispiel 4 | 145 | 0,010 | $2{,}6 \cdot 10^6$ | 0,79 |
| Beispiel 5.1 als Vergleich | 105 | 0,012 | $5{,}6 \cdot 10^6$ | 1,1 |
| Beispiel 5,2 als Vergleich | 110 | 0,0125 | $4{,}2 \cdot 10^6$ | 1,0 |

**Patentansprüche**

1. Verfahren zur Herstellung von perlförmigen expandierbaren Styrolpolymerisaten durch Polymerisation von Styrol, gegebenenfalls unter Mitverwendung weiterer Comonomerer, in wäßriger Suspension in Gegenwart üblicher Suspensionsstabilisatoren und üblicher styrollöslicher Polymerisationskatalysatoren und unter Zusatz von 1 bis 10 Gew.-% eines $C_3$- bis $C_6$-Kohlenwasserstoffs als Treibmittel und gegebenenfalls üblicher Zusatzstoffe in wirksamen Mengen, dadurch gekennzeichnet, daß man

   a) durch rasches Erhitzen des Polymerisationsansatzes innerhalb von maximal 2 Stunden auf 80 bis 90 °C die Polymerisation einleitet,

   b) anschließend die Reaktionstemperatur um 8 bis 17 °C pro Stunde bis auf 120 °C bis 130 °C ansteigen läßt, und daß

   c) bei Erreichen von 100 °C der Umsatz 30 bis 60 % beträgt, und

   d) bei Erreichen der Maximaltemperatur der Umsatz mindestens 80 % beträgt, und

   e) daß man den Ansatz anschließend bei einer Temperatur zwischen 100 und 130 °C so lange hält, bis der Restmonomerengehalt im Polymerisat auf weniger als 0,1 % abgesunken ist.

2. Verfahren nach Anspruch 1, dadurch gekennzeichnet, daß die Polymerisation in Gegenwart üblicher Kettenüberträger, insbesondere tert.-Dodecylmercaptan, in Mengen von 0,0001 bis 0,01 Gew.-%, bezogen auf Styrol, durchgeführt wird.

3. Verwendung der nach Anspruch 1 hergestellten expandierbaren Styrolpolymerisate zur Herstellung von Schaumstoff-Formkörpern der Dichte 0,005 bis 0,1 g/cm$^3$

**Claims**

1. A process for the preparation of a bead-form expandable styrene polymer by polymerization of styrene, if desired with further comonomers, in aqueous suspension in the presence of customary suspension stabilizers and customary styrene-soluble polymerization catalysts and with addition of from 1 to 10 % by weight of a $C_3$- to $C_6$-hydrocarbon as blowing agent and, if desired, customary additives in effective amounts, which comprises

   a) initiating the polymerization by rapidly heating the polymerization batch to from 80 to 90 °C within a maximum of 2 hours,

   b) subsequently allowing the reaction temperature to increase to from 120 °C to 130 °C by from 8 to 17 °C per hour, and wherein

   c) the conversion is from 30 to 60 % when 100 °C is reached, and

   d) the conversion is 80 % or more when the maximum temperature is reached, and which comprises

   e) subsequently keeping the batch at from 100 to 130 °C until the residual monomer content in the polymer has dropped to less than 0.1 %.

2. A process as claimed in claim 1, wherein the polymerization is carried out in the presence of a customary chain-transfer agent, in particular tert-dodecyl mercaptan, in an amount of from 0.0001 to 0.01 % by weight, based on styrene.

3. The use of an expandable styrene polymer prepared as claimed in claim 1 for the production of foam moldings having a density of from 0.005 to 0.1 g/cm$^3$.

**Revendications**

1. Procédé de fabrication de polymères du styrène expansibles, sous forme de perles, par la polymérisation du styrène, avec éventuelle utilisation conjointe d'autres comonomères, en suspension aqueuse et en présence de stabilisateurs de suspension habituels et de catalyseurs de polymérisation solubles dans le styrène usuels et sous addition de 1 à 10% en poids d'un hydrocarbure en $C_3$ à $C_6$ servant d'agent porogène et d'éventuels additifs habituels, en proportions actives, caractérisé en ce que

   a) on amorce la polymérisation par le chauffage rapide du mélange de polymérisation jusqu'à 80 à 90 °C en l'espace d'au maximum 2 heures,

   b) on laisse ensuite la température du mélange réactionnel s'élever jusqu'à 120 °C à 130 °C à raison de 8 à 17 °C par heure et en ce que

   c) la conversion est de 30 à 60% en atteignant 100 °C et

d) la conversion est d'au moins 80% en atteignant la température maximale et en ce que

e) on maintient ensuite la masse réactionnelle à une température qui fluctue de 100 à 130°C, jusqu'à ce que la teneur en monomères résiduels dans le polymère soit réduite à moins de 0,1%.

2. Procédé suivant la revendication 1, caractérisé en ce que l'on entreprend la polymérisation en présence d'agents de transfert de chaînes usuels, plus particulièrement le tert-dodécylmercaptan, en proportions de 0,0001 à 0,01% en poids, par rapport au styrène.

3. Utilisation des polymères du styrène expansibles, obtenus suivant la revendication 1, en vue de la fabrication d'articles moulés en mousse d'une masse spécifique de 0,005 à 0,1 g/cm$^3$.